# EUROPÄISCHE PATENTSCHRIFT

(11) **EP 1 582 876 B1**
(45) Veröffentlichungstag und Bekanntmachung des Hinweises auf die Patenterteilung: **07.02.2007**
(21) Anmeldenummer: 05006832.9
(22) Anmeldetag: 30.03.2005
(51) Int. Cl.: G01P 5/07, G01P 13/04, G01P 21/02, E06B 9/24, E06B 9/56

(54) **Windgeschwindigkeitsmessvorrichtung**
Wind speed sensor
Capteur de vitesse du vent

(30) Priorität: 31.03.2004 DE 202004005296 U
(43) Veröffentlichungstag der Anmeldung: 05.10.2005
(73) Patentinhaber: Stengler, Klaus, 33758 Schloss Holte (DE)
(72) Erfinder: Stengler, Klaus, 33758 Schloss Holte (DE)
(74) Vertreter: Brandt, Detlef

(56) Entgegenhaltungen:
- DE-B1- 2 916 504
- GB-A- 2 189 663
- PATENT ABSTRACTS OF JAPAN Bd. 1999, Nr. 08, 30. Juni 1999 (1999-06-30) -& JP 11 072502 A (FUJITSU DENSO LTD), 16. März 1999 (1999-03-16)

## Beschreibung

Die Erfindung betrifft eine Windgeschwindigkeitsmessvorrichtung mit einem Gehäuse, einem im Gehäuse gelagerten, aus mehreren, sternförmig auf einer Kreisebene angeordneten Windflügeln aufgebauten Antriebsrotor zur Drehung einer Rotorachse in eine vorbestimmte Drehrichtung, mit einer Abtastvorrichtung zur Abnahme der Drehgeschwindigkeit und der Drehrichtung der Rotorachse und zur Generierung elektrischer Drehgeschwindigkeitssignale und elektrischer Drehrichtungssignale.

Die eingangs geschilderte gattungsgemäße Windgeschwindigkeitsmessvorrichtung wird für unterschiedliche technische Zwecke eingesetzt. Ein Einsatzgebiet ist beispielsweise die ständige Überwachung der Windgeschwindigkeit zum Schutz von Gebäuden bzw. Gebäudeteilen. Insbesondere an Außenfassaden von Gebäuden angebrachte Markisen oder sonstige Sonnenschutzeinrichtungen werden bei höheren Windgeschwindigkeiten unweigerlich zerstört, sofern sie nicht rechtzeitig eingefahren und in schützenden Gehäusen untergebracht werden. Die Überwachung derartiger Sonnenschutzeinrichtungen erfolgt in der Regel über so genannte Gebäudeautomatisierungssysteme, die unter anderem eine automatische Steuerung derartiger Sonnenschutzsysteme zum einen in Abhängigkeit der Sonneneinstrahlung, zum anderen aber in Abhängigkeit von widrigen Windverhältnissen vornehmen. Zulieferer für die Ansteuerungsignale der Gebäudeautomatisierungssysteme in Bezug auf erhöhte Windgeschwindigkeiten an den betreffenden Gebäuden sind die eingangs geschilderten Windgeschwindigkeitsmessvorrichtungen. Diese Windgeschwindigkeitsmessvorrichtungen werden auch als Anemometer bezeichnet und sind in der Regel auf dem Dach des zu überwachenden Gebäudes montiert. Diese Anordnung macht eine visuelle Kontrolle der richtigen Funktionsweise derartiger Windgeschwindigkeitsmessvorrichtungen durch Inaugenscheinnahme schwierig bzw. unmöglich. Da in Folge ungünstiger Windverhältnisse insbesondere in Bezug auf erhöhte Windgeschwindigkeiten erhebliche Schäden an Gebäuden auftreten können, ist eine korrekte Funktionsweise derartiger Windgeschwindigkeitsmessvorrichtungen insbesondere unter Sicherheitsaspekten grundlegend für den einwandfreien Betrieb der genannten Gebäudeautomatisierungssysteme.

Ein Ausfall der genannten Windgeschwindigkeitsmessvorrichtungen kann prinzipiell durch drei verschiedene Ursachen bedingt sein. Zum einen kann die Lagerung des Antriebsrotors blockiert oder die Abtastvorrichtung zur Abnahme der Drehgeschwindigkeit und der Drehrichtung defekt sein. Beide Ursachen führen zu einer fehlenden Übermittlung der durch die Abtastvorrichtung üblicherweise generierten elektrischen Drehgeschwindigkeitssignale und Drehrichtungssignale. Das Gebäudeautomatisierungssystem wird das Fehlen der üblichen Signale zunächst als fehlende Windbewegung interpretieren. Um einen der genannten Fehler der Windgeschwindigkeitsmessvorrichtung von fehlenden Windbewegungen zu unterscheiden, hat sich in der Praxis die Vorgehensweise bewährt, einen der Abtastvorrichtung zugeordneten Zeitgeber von jedem durch den Antriebsrotor bereitgestellten Drehgeschwindigkeitsimpuls zu triggern. Ist nach einer bestimmten Zeitspanne von beispielsweise fünfzig Stunden keine Nachtriggerung des Zeitgebers erfolgt, wird an das Gebäudeautomatisierungssystem eine Fehlermeldung übermittelt, da davon auszugehen ist, dass auch in windarmen Zeiten und Regionen spätestens nach der genannten Zeit ein leichter Windhauch zu registrieren sein wird, der zu einem Ansprechen des Antriebsrotors führt.

Im Hinblick auf mögliche Ausfallursachen für die genannten Windgeschwindigkeitsmessvorrichtungen besteht jedoch eine weitere Möglichkeit, deren Erkennung bisher nicht bekannt ist. Sollte einer oder mehrere der Windflügel des Antriebsrotors beschädigt werden oder abbrechen, so wird sich der Rotor zwar nicht mehr in der vorgegebenen Drehrichtung bewegen, es erfolgt jedoch insbesondere bei niedrigen bis mittleren Windgeschwindigkeiten eine sogenannte Flatterbewegung des Antriebsrotors. Darüber hinaus wird ein beschädigter Antriebsrotor veränderten Windrichtungen folgen und somit ebenfalls eine gewisse Drehbewegung ausführen.

Sowohl die Flatterbewegung als auch die in gewissen Grenzen bei Windrichtungswechseln vorhandene Drehbewegung des Antriebsrotors täuscht durch die Erzeugung von Drehrichtungs- und Drehgeschwindigkeitssignalen eine korrekte Funktionsweise der Windgeschwindigkeitsmessvorrichtung vor, die tatsächlich nicht gegeben ist und insbesondere bei auftretenden höheren Geschwindigkeiten eine fehlerhafte Funktionsweise des Gebäudeautomatisierungssystems herbeiführt, da dieses die zu überwachenden Sonnenschutzvorrichtungen nicht einfährt.

Die Schrift DE 29 16 504 B1 offenbart ein gebräuchliches Schalensternanemometer gemäß dem Oberbegriff von Anspruch 1 der Anmeldung und erwähnt außerdem die Erkenntnis, dass der Antriebsrotor (Schalenstern) in bestimmten Problemfällen nicht in seiner durch die Symmetrie seiner Konstruktion vorgegebenen bevorzugten Drehrichtung rotiert.

Die Schrift PATENT ABSTRACTS OF JAPAN Bd. 1999, Nr. 08, 30. Juni 1999 (1999-06-30) -& JP 11 072502 A D2 lehrt eine Überwachungsschaltung, die ein Warnsignal ausgibt, wenn während einer vorgegebenen Zeitspanne trotz der vom Anemometer angezeigten Windstille (Ausbleiben von Geschwindigkeitspulsen) ein separater Aufnehmer für die vektorielle Windrichtung eine Mindestzahl von Wechseln des Windrichtungsvektors feststellt. Eine Drehrichtungsumkehr der Anemometer-Rotorachse selbst wird von dieser Vorrichtung nicht erfasst.

Aufgabe der vorliegenden Erfindung ist es, ausgehend von der geschilderten Problemstellung eine Windgeschwindigkeitsmessvorrichtung der gattungsgemässen Art so weiter zu entwickeln, dass auch bei Beschädigung des Antriebsrotors einer derartigen Vorrichtung eine Fehlermeldung an nachgeschaltete Überwachungs- und Steuerungssysteme übermittelt wird.

Diese Aufgabe wird erfindungsgemäß dadurch gelöst, dass der zur Windgeschwindigkeitsmessvorrichtung gehörenden Abtastvorrichtung ein Auswertebaustein zugeordnet ist, der beim Auftreten von Drehrichtungssignalen, welche nicht der vorbestimmten Drehrichtung entsprechen, die Weitergabe der Drehgeschwindigkeitssignale sperrt, wobei eine Entsperrung erst dann erfolgt, wenn an den Auswertebaustein eine Mehrzahl aufeinander folgender Drehrichtungssignale der vorbestimmten Drehrichtung übermittelt worden sind. Durch die Ergänzung der Windgeschwindigkeitsmessvorrichtung mit einem derartigen Auswertebaustein lässt sich die Winkelbewegung des Antriebsrotors gezielt auswerten, da im Gegensatz zum ungestörten Betrieb beim Fehlen eines oder mehrerer Flügel eine oszillierende Bewegung auftritt. Da die Drehrichtung des Antriebsrotors durch die Form und Ausrichtung der Flügel vorgegeben ist, kann der Auswertebaustein relativ einfach eine richtige Drehrichtung von einer unrichtigen Drehrichtung unterscheiden. Dabei ist es unwesentlich, welche Art von Abtastvorrichtung in der Windgeschwindigkeitsmessvorrichtung Verwendung findet. Ob die Erfassung und Weiterleitung von Drehrichtung und Drehgeschwindigkeit durch pulsierende Signale die mittels Kontakten, Lichtschranken oder magnetischen Sensoren generiert werden, erfolgt oder aber in Form von analogen Signalen beispielsweise mittels eines Tachogenerators oder einer nachgeschalteten Frequenz-Spannungswandlung vorliegt, ist für die Realisierung der erfinderischen technischen Lehre ohne Belang, solange dem Auswertebaustein beide möglichen Drehrichtungen in Form von elektrischen Drehrichtungssignalen übermittelt wird. Somit lässt sich die Erfindung bei allen Windgeschwindigkeitsmessvorrichtungen anwenden, wobei bestehende Vorrichtungen durch separate angepasste Auswertebausteine aufgerüstet werden können.

Spezielle Ausgestaltungen des Gegenstandes der Erfindung ergeben sich zusätzlich aus den auf den unabhängigen Anspruch rückbezogenen abhängigen Anspruchen.

Es hat sich insbesondere als vorteilhaft erwiesen, insbesondere bei der Neukonzipierung von Windgeschwindigkeitsmessvorrichtungen gemäß der Erfindung Auswertebaustein und Abtastvorrichtung integral im Gehäuse der Windgeschwindigkeitsmessvorrichtung aufzunehmen. Auf diese Weise entsteht eine kompakte Einheit, von der aus nur eine elektrische Verbindung zum nachgeschalteten Gebäudeautomatisierungssystem notwendig ist, was den Montage- und Herstellaufwand herabsetzt.

Darüber hinaus hat es sich als zweckmäßig erwiesen, dass die dem Auswertebaustein zur Entsperrung der Drehgeschwindigkeitssignale bereitgestellten Drehrichtungssignale mindestens einer halben Umdrehung des Antriebsrotors in der vorbestimmten Drehrichtung entsprechen. Auf diese Weise ist sichergestellt, dass auch ein stärkeres Flattern des Antriebsrotors in Folge mehrerer beschädigter Windflügel nicht irrtümlich dazu führt, dass das Gebäudeautomatisierungssystem eine korrekte Arbeitsweise der Windgeschwindigkeitsmessvorrichtung unterstellt.

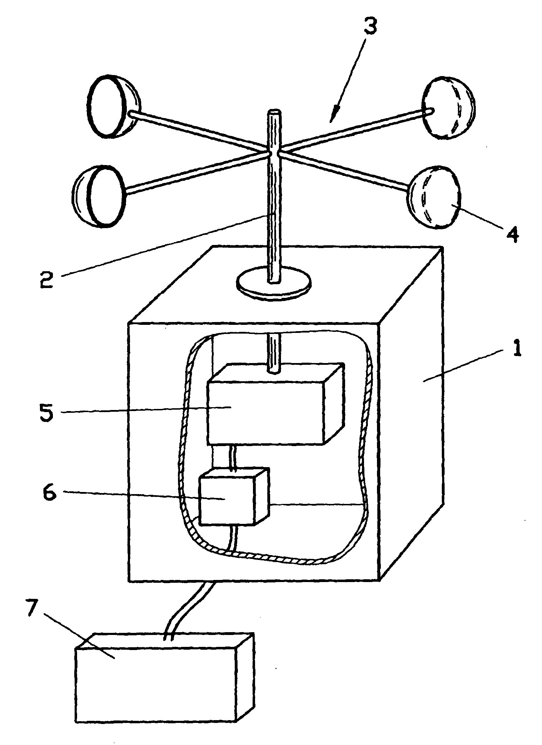

Im Folgenden wird der Gegenstand der Erfindung anhand der beigefügten Zeichnung näher erläutert. Die Zeichnung zeigt dabei schematisch die wesentlichen Bestandteile der erfindungsgemäßen Windgeschwindigkeitsmessvorrichtung.

Diese weist ein Gehäuse 1 auf, welches in diesem Ausführungsbeispiel im Wesentlichen rechteckförmig ausgebildet ist und aus dem an seiner Oberseite eine Rotorachse 2 herausragt, an deren oberen, dem Gehäuse 1 abgewandten Ende ein Antriebsrotor 3 befestigt ist. Selbstverständlich sind auch andere Gehäuseformen denkbar. Der Antriebsrotor 3 besteht aus mehreren sternförmig auf einer Kreisebene angeordneten Windflügeln 4, die im dargestellten Ausführungsbeispiel halbschalenförmig ausgebildet sind. Natürlich ist für die Funktionsweise des Antriebsrotors 3 die Gestaltung der Windflügel von untergeordneter Bedeutung. Wesentlich ist allein die durch die Windflügel vorbestimmte Drehrichtung des Antriebsrotors 3.

Der Figur ist ferner zu entnehmen, dass am unteren, innerhalb des Gehäuses gelagerten Ende der Rotorachse 2 eine Abtastvorrichtung 5 angeordnet ist, welche die Drehgeschwindigkeit und die Drehrichtung der Rotorachse 2 abtastet und darüber hinaus aus den abgetasteten Impulsen elektrische Drehgeschwindigkeitssignale und elektrische Drehrichtungssignale generiert. Derartige Abtastvorrichtungen sind prinzipiell aus dem Stand der Technik bekannt. Die Drehrichtung und die Drehbewegung können beispielsweise mittels Kontakten, Lichtschranken oder magnetischen Sensoren pulsierend ermittelt werden, wobei in der Abtastvorrichtung vorhandene nachgeschaltete Frequenz- Spannungswandler aus den pulsierenden Abtastsignalen die notwendigen elektrischen Drehgeschwindigkeits- und Drehrichtungssignale formen. Da unterschiedliche konstruktive Varianten von Abtastvorrichtungen am Markt verfügbar sind, wurde die Darstellung auf eine so genannte Blackbox beschränkt.

Erfindungsgemäß ist der Abtastvorrichtung ein Auswertebaustein 6 zugeordnet, der im dargestellten Ausführungsbeispiel ebenfalls innerhalb des Gehäuses 1 befindlich ist. Diesem Auswertebaustein 6 werden die von der Abtastvorrichtung 5 generierten Drehgeschwindigkeitssignale und Drehrichtungssignale über geeignete Übertragungselemente wie Kabel übermittelt. Treten bei den Drehrichtungssignalen solche auf, die nicht der vorbestimmten Drehrichtung des Antriebsrotors entsprechen, so sperrt der Auswertebaustein die Weitergabe der parallel dazu übermittelten Drehgeschwindigkeitssignale an ein ebenfalls als Blackbox dargestelltes Gebäudeautomatisierungssystem 7, welches für die Steuerung beispielsweise von Sonnenschutzanlagen, die an der Außenseite von Gebäuden angebracht sind und die keinen erhöhten Windgeschwindigkeiten ausgesetzt werden dürfen, zuständig ist.

Der Auswertebaustein 6 kann entsprechend einer alternativen Ausgestaltung natürlich auch dem Gebäudeautomatisierungssystem zugeordnet sein, was insbesondere dann vorteilhaft ist, falls innerhalb des Gehäuses der verwendeten Windgeschwindigkeitsmessvorrichtung kein zusätzlicher Bauraum vorhanden sein sollte. Systemspezifisch gehört jedoch der Auswertebaustein 6 zur Windgeschwindigkeitsmessvorrichtung, da am Ausgang des Auswertebausteines 6 sowohl die Signale für die Windgeschwindigkeit als auch die Fehlersignale bereitgestellt werden, die in Folge einer Blockierung des Antriebsrotors 3 oder in Folge einer Beschädigung der Windflügel 4 des Antriebsrotors 3 zur Ansteuerung des Gebäudeautomatisierungssystems 7 notwendig sind.

### Bezugszeichenliste:

- 1.: Gehäuse
- 2.: Rotorachse
- 3.: Antriebsrotor
- 4.: Windflügel
- 5.: Abtastvorrichtung
- 6.: Auswertebaustein
- 7.: Gebäudeautomatisierungssystem

## Patentansprüche

1. Windgeschwindigkeitsmessvorrichtung mit einem Gehäuse, einem im Gehäuse gelagerten, aus mehreren sternförmig auf einer Kreisebene angeordneten Windflügeln aufgebauten Antriebsrotor zur Drehung einer Rotorachse in eine vorbestimmte Drehrichtung, mit einer Abtastvorrichtung zur Abnahme der Drehgeschwindigkeit und der Drehrichtung der Rotorachse und zur Generierung elektrischer Drehgeschwindigkeitssignale und elektrischer Drehrichtungssignale,
**dadurch gekennzeichnet, dass**
der Abtastvorrichtung (5) ein Auswertebaustein (6) zugeordnet ist, der beim Auftreten von Drehrichtungssignalen, welche nicht der vorbestimmten Drehrichtung entsprechen, die Weitergabe der Drehgeschwindigkeitssignale sperrt, wobei eine Entsperrung erst dann erfolgt, wenn an den Auswertebaustein (6) eine Mehrzahl aufeinander folgender Drehrichtungssignale der vorbestimmten Drehrichtung übermittelt worden sind.

2. Windgeschwindigkeitsmessvorrichtung nach Anspruch 1,
**dadurch gekennzeichnet, dass**
Auswertebaustein (6) und Abtastvorrichtung (5) integral im Gehäuse (1) der Windgeschwindigkeitsmessvorrichtung aufgenommen sind.

3. Windgeschwindigkeitsmessvorrichtung nach Anspruch 1 oder 2,
**dadurch gekennzeichnet, dass**
die dem Auswertebaustein (6) zur Entsperrung der Drehgeschwindigkeitssignale bereitgestellten Drehrichtungssignale mindestens einer halben Umdrehung des Antriebsrotors (3) in der vorbestimmten Drehrichtung entsprechen.

## Claims

1. Wind speed sensor having a housing, a drive rotor supported within the housing comprising several wind vanes which are disposed in a star-shape on a circular plane for turning a rotor axle in a pre-determined direction, with a scanning device to pick up the rotary speed and the rotor axle's direction of rotation and to generate electrical rotary speed signals and electrical direction of rotation signals,
**characterised in that**
an evaluation module (6) is assigned to the scanning device (5), said module blocking forwarding of the rotary speed signals on the occurrence of direction of rotation signals which do not correspond to the predetermined direction of rotation, whereby unblocking only takes place when a majority of direction of rotation signals of the predetermined direction of rotation have been transmitted to the evaluation module (6) one after the other.

2. Wind speed sensor according to claim 1,
**characterised in that**
evaluation module (6) and scanning device (5) are accommodated integrally within the housing (1) of the wind speed sensor.

3. Wind speed sensor according to claim 1 or 2,
**characterised in that**
the direction of rotation signals with which the evaluation module (6) is provided for unblocking of the rotary speed signals, correspond to at least half a revolution of the drive rotor (3) in the predetermined direction of rotation.

## Revendications

1. Dispositif anémomètre comprenant un boîtier, un rotor d'entraînement logé dans le boîtier, composé de plusieurs ailes disposées en forme d'étoile dans un plan de cercle, destiné à entraîner en rotation un arbre de rotor dans un sens de rotation prédéterminé, comportant un dispositif capteur destiné à relever la vitesse de rotation et le sens de rotation de l'arbre de rotor, et à générer des signaux électriques de vitesse de rotation et des signaux électriques de sens de rotation,
**caractérisé en ce qu'**un module d'analyse (6) est associé au dispositif capteur (5), module qui, en présence de signaux de sens de rotation, qui ne correspondent pas au sens de rotation prédéterminé, bloque la retransmission des signaux de vitesse de rotation, un déblocage n'étant effectué que si une multitude de signaux successifs de sens de rotation, qui correspondent au sens de rotation prédéfini, ont été transmis au module d'analyse (6).

2. Dispositif anémomètre selon la revendication 1, **caractérisé en ce que** le module d'analyse (6) et le dispositif capteur (5) sont logés de façon intégrante dans le boîtier (1) du dispositif anémomètre.

3. Dispositif anémomètre selon la revendication 1 ou 2, **caractérisé en ce que** les signaux de sens de rotation communiqués au module d'analyse (6) en vue du déblocage des signaux de vitesse de rotation correspondent à au moins un demi tour de l'arbre d'entraînement (3) dans le sens de rotation prédéterminé.
